# EUROPÄISCHE PATENTANMELDUNG

(11) **EP 2 447 623 A2**
(43) Veröffentlichungstag der Anmeldung: **02.05.2012**
(21) Anmeldenummer: 11008521.4
(22) Anmeldetag: 25.10.2011
(51) Int. Cl.: F25B 17/08, F25B 30/04

(54) **Sorptionswärmepumpe**

(30) Priorität: 02.11.2010 DE 102010050014
(71) Anmelder: Vaillant GmbH, 42859 Remscheid (DE)
(72) Erfinder: Sick, Jan-Hinrich, 42897 Remscheid (DE); Salg, Frank, 42897 Remscheid (DE); Spahn, Hans-Josef, 40699 Erkrath (DE)
(74) Vertreter: Hocker, Thomas

(57) **Zusammenfassung**

Die Erfindung betrifft eine Sorptionswärmepumpe. Es wird vorgeschlagen, die Reaktorseite, das Verbindungsrohr und die Verdampfer/Kondensator-Seite als prismatisches, bevorzugt zylindrisches Sorptionsbauteil auszuführen. Weiterhin wird vorgeschlagen, einen Sorptionsapparat mit zwei benachbarten, wärmeisolierend getrennten Kammern auszuführen. In der Wärmeisolierung zwischen den Kammern sind zylindrische bzw. prismatische Öffnungen eingebracht, durch die die Sorptionsbauteile eingeschoben sind.

## Beschreibung

Die Erfindung betrifft eine Sorptionswärmepumpe, insbesondere für die Beheizung oder Klimatisierung von Gebäuden.

Sorptionswärmepumpen können als Adsorptions- oder Absorptionswärmepumpen beispielsweise auf der Basis von Zeolith/Wasser, Lithiumbromid/Wasser, Lithiumchlorid/Wasser, Ammoniak/Wasser etc. ausgeführt sein. Sie basieren auf einem zyklischen Prozess, in welchem eine verdampfbare Flüssigkeit als Arbeitsmittel über eine Dampfphase zwischen den Zuständen als Sorbat auf einem Sorptionsmittel und als separat aufgefangenes Kondensat wechselt. Die Verringerung des temperaturabhängigen Dampfdrucks des Arbeitsmittels im sorbierten Zustand gestattet die zyklische Anwendung in einem reversiblen Prozess, welcher einen Wärmetransformationsvorgang unterhält. Die technische Ausführung eines Reaktors zu Ab- und/oder Adsorption und erneuten Desorption wird mit dem Verdampfer/Kondensator so verbundenen, dass ein Dampftransport vom einen Teil in den anderen Teil des Apparats ermöglicht wird, z.B. mittels einer Rohrleitung. Neben dem aktiven Material (Sorptionsmittel) und dem Arbeitsmittel können auch Füllstoffe oder Strukturen zur Verbesserung des Wärmeaustauschs, der mechanischen Festigkeit oder zur gleichmäßigen Aufnahme und Verteilung einer flüssigen Phase enthalten sein.

Es wird vorgeschlagen, die Reaktorseite, das Verbindungsrohr und die Verdampfer/Kondensator-Seite als prismatisches, bevorzugt zylindrisches Sorptionsbauteil auszuführen. Dadurch kann es einfach hergestellt und montiert werden. Insbesondere die Massenfertigung ist hierdurch besonders begünstigt.

Weiterhin wird vorgeschlagen, einen Sorptionsapparat mit zwei benachbarten, wärmeisolierend getrennten Kammern auszuführen. In der Wärmeisolierung zwischen den Kammern sind zylindrische bzw. prismatische Öffnungen eingebracht, durch die die prismatischen, bevorzugt zylindrischen Sorptionsbauteile eingeschoben sind. Vorteilhafterweise sind die Bauteile in diesem Bereich in Achsrichtung schlecht wärmeleitend. Dies ist z.B. dann der Fall, wenn innerhalb des Bauteils ein Unterdruck herrscht und die Wandung aus einem schlecht wärmeleitenden Material wie Edelstahl besteht.

Die Erfindung wird nun anhand der Figur detailliert erläutert.

Es stellt dar:

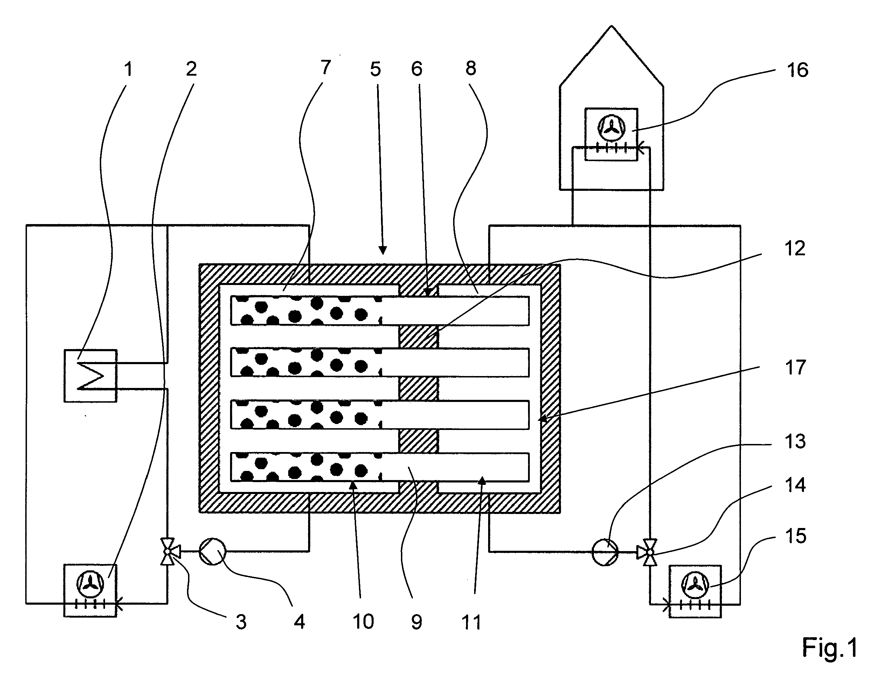

- Figur 1:: Eine erfindungsgemäße Sorptionswärmepumpe mit Sorptionsapparat.

In Figur 1 ist eine Sorptionswärmepumpe mit Sorptionsapparat 5 dargestellt. Der Sorptionsapparat 5 ist in eine erste Kammer 7 und eine zweite Kammer 8 aufgeteilt, die jeweils durch die Wand 12 wärmeisolierend getrennt sind. Die Wand 12 weist Öffnungen 6 auf, durch die Sorptionsbauteile 17 gesteckt sind. Die Sorptionsbauteile 17 weisen eine Reaktorseite 10, eine Verdampfer/Kondensator-Seite 11 und eine Rohrleitung 9 auf, die beide Seiten miteinander Verbindet. Die Reaktorseite 10 befindet sich in der ersten Kammer 7, die Verdampfer/Kondensator-Seite 11 befindet sich in der zweiten Kammer 8. Die Sorptionsbauteile 17 sind prismatisch, bevorzugt zylindrisch aufgebaut und können leicht in die Öffnungen 6 eingesteckt werden. Dadurch ergibt sich eine besonders einfache Bauweise des Sorptionsbauteils 17, das insbesondere in einer Großserie preiswert hergestellt werden kann. Durch den Einsatz mehrerer Sorptionsbauteile 17 kann die Leistung leicht an dem Bedarf angepasst werden. Auf der linken Reaktorseite wird erste Kammer mithilfe einer ersten Pumpe 4 und einem hier nicht dargestellten Wärmeträgermedium mittels eines ersten 3-Wege-Ventils 3 wechselseitig mit einer Wärmequelle 1 oder mit einem ersten Kühler 2 verbunden. Die zweite Kammer 8 wird ebenfalls mittels einer zweiten Pumpe 13 und einem nicht dargestellten Wärmeträgermedium mittels eines zweiten 3-Wege-Ventils 14 wechselseitig mit einem zweiten Kühler 15 oder einem Objekt 16, in diesem Beispiel einem zu klimatisierten Gebäude, verbunden. Zu der Funktionsweise einer Sorptionswärmepumpe wird auf den Stand der Technik verwiesen.

### Bezugszeichenliste

- 1: Wärmequelle
- 2: Erster Kühler
- 3: Erstes 3-Wege-Ventil
- 4: Erste Pumpe
- 5: Sorptionsapparat
- 6: Öffnung
- 7: Erste Kammer
- 8: Zweite Kammer
- 9: Rohrleitung
- 10: Reaktorseite
- 11: Verdampfer/Kondensator-Seite
- 12: Wand
- 13: Zweite Pumpe
- 14: Zweites 3-Wege-Ventil
- 15: Zweiter Kühler
- 16: Objekt
- 17: Sorptionsbauteil

## Patentansprüche

1. Sorptionswärmepumpe, insbesondere für die Beheizung oder Klimatisierung vom Gebäuden, mit einem oder mehreren in einem Sorptionsapparat (5) vorgesehenen Sorptionsbauteilen (17), wobei die Sorptionsbauteile (17) über eine Reaktorseite (10) mit einem Sorbens und eine Verdampfer/Kondensator-Seite (11) verfügen und wobei die Reaktorseite (10) und die Verdampfer/Kondensator-Seite (11) mit einer Rohrleitung (9) verbunden sind, **dadurch gekennzeichnet, dass** das Sorptionsbauteil zumindest ein einem Teilbereich prismatisch, bevorzugt zylindrisch ausgeführt ist und dass der Teilbereich sich über die Rohrleitung (9) und zumindest die Reaktorseite (10) und/oder Verdampfer/Kondensator-Seite (11), bevorzugt über die Rohrleitung (9), die Reaktorseite (10) und Verdampfer/Kondensator-Seite (11) erstreckt.

2. Sorptionswärmepumpe nach Anspruch 1, **dadurch gekennzeichnet, dass** der Sorptionsapparat (5) über eine erste Kammer (7) und eine zweite Kammer (8) verfügt, wobei die erste Kammer (7) und eine zweite Kammer (8) durch eine isolierende Wand (12) voneinander getrennt sind, und dass die Wand über Öffnungen (6) verfügt, in die die Sorptionsbauteile (17) eingesteckt sind.
